# EUROPÄISCHE PATENTANMELDUNG

(11) **EP 4 748 875 A1**
(43) Veröffentlichungstag der Anmeldung: **27.05.2026**
(21) Anmeldenummer: 24214590.2
(22) Anmeldetag: 21.11.2024
(51) Int. Cl.: C08J 9/00, C08J 9/32, C08L 89/00

(54) **VERFAHREN ZUR HERSTELLUNG EINES SCHAUMKÖRPERS AUF BASIS VON PFLANZENPROTEIN, SCHAUMKÖRPER UND SANDWICHBAUTEIL UMFASSEND EINEN SCHAUMKÖRPER**

(71) Anmelder: Universität Kassel (Körperschaft d. öffentlichen Rechts), 34125 Kassel (DE)
(72) Erfinder: BURNETT-BARKING, Moira, 38106 Braunschweig (DE); Kahlmeyer, Martin, 34260 Kaufungen (DE); FAZLIU, Bajram, 34127 Kassel (DE); WINKEL, Andreas, 34125 Kassel (DE); BÖHM, Stefan, 38179 Schwülper (DE)
(74) Vertreter: Walther Bayer Faber Patentanwälte PartGmbB

(57) **Zusammenfassung**

Gegenstand der Erfindung ist ein Verfahren zur Herstellung eines Schaumkörpers (1) auf der Basis von Pflanzenproteinen, wobei das Verfahren wenigstens die folgenden Schritte umfasst: Bereitstellung einer Proteinmasse (10), Zugabe eines Expansionsmittels (11) umfassend thermisch aktivierbare Expansionskapseln (12), Erwärmen der Proteinmasse (10) mit den Expansionskapseln (12), wodurch
1. die Proteinmasse (10.1) in eine denaturierte Proteinmasse (10.2) überführt wird und
2. die Expansionskapseln (12) aktiviert werden und expandieren.

## Beschreibung

### STAND DER TECHNIK

Die Erfindung betrifft ein Verfahren zur Herstellung eines porösen, druckfesten Schaumkörpers auf der Basis von Pflanzenproteinen sowie einen erfindungsgemäß hergestellten Schaumkörper und ein Sandwichbauteil mit einem solchen Schaumkörper.

Proteine stellen eine Grundlage für die Herstellung von Biokunststoffen dar. Besonders pflanzliche Proteine, die bei der Herstellung von Stärke oder Pflanzenölen aus Mais, Erbsen, Weizen, Soja und Sonnenblumen als Koppelprodukte anfallen, werden verstärkt genutzt. Proteine aus tierischen Erzeugnissen wie Gelatine, Casein, Molkenprotein oder Keratin eignen sich ebenfalls für die Herstellung von Biopolymeren.

Schäume sind vielseitige Materialien, die sowohl in synthetischer als auch in nachhaltiger Form in einer Vielzahl von Anwendungen eingesetzt werden. Ihre porige Struktur, die z.B. durch den Einsatz von Treibmitteln entsteht, verleiht den Schäumen vorteilhafte physikalische Eigenschaften wie geringe Dichte, thermische Isolationsfähigkeit und stoßdämpfende Eigenschaften. In Sandwichstrukturen können sie als Kernlage mit geringer Dichte zudem die spezifische Steifigkeit verbessern. Diese Eigenschaften machen Schäume in vielen Industrien unverzichtbar. Zu den am häufigsten verwendeten synthetischen Polymerschäumen gehören Polyurethanschäume (PUR), Polystyrolschäume (EPS und XPS) und Polyethylenschäume (PE).

PUR sind in verschiedenen Dichten und Härten erhältlich, was sie für eine Vielzahl von Anwendungen geeignet macht. Weichschäume finden sich in Polstermöbeln, Matratzen und Autositzen, während Hartschäume für die Wärmedämmung in Gebäuden und Haushaltsgeräten verwendet werden. Polyurethanschäume bieten eine hervorragende Wärmedämmung und sehr gute mechanische Eigenschaften, sind aber aufgrund ihrer petrochemischen Basis nicht nachhaltig.

Polystyrolschäume sind Schaummaterialien aus geschäumtem Polystyrol. Der bekannteste Vertreter von expandiertem Polystyrol (EPS) ist Styropor^{®} und wird häufig in Verpackungen, als Dämmmaterial und für leichte Bauelemente verwendet. Extrudiertes Polystyrol (XPS) wird aufgrund der höheren Druckfestigkeit oft in Bauanwendungen wie der Isolierung von Fundamenten und Flachdächern eingesetzt. Beide Schäume sind leicht und bieten gute Isoliereigenschaften, ihre Herstellung und Entsorgung sind jedoch ebenfalls umweltbelastend und damit nicht nachhaltig.

Polyethylenschäume (PE) sind vor allem flexibel und widerstandsfähig gegen Feuchtigkeit und Chemikalien. Sie werden in der Verpackungsindustrie, als Isolationsmaterial und in Sport- und Freizeitprodukten eingesetzt. PE-Schäume sind langlebig, aber ebenfalls petrochemischer Basis.

Angesichts der Umweltauswirkungen synthetischer Schäume werden zunehmend nachhaltige, umweltfreundliche Alternativen entwickelt, die auf natürlichen, nachwachsenden Rohstoffen basieren und oft auch biologisch abbaubar sind.

Biopolymerschäume können aus fermentierten Pflanzenzuckern wie Maisstärke gewonnen werden und sind biologisch abbaubar. Verbreitet sind Polylactidschäume (PLA), welche in der Verpackungsindustrie, für Einwegprodukte und in der Landwirtschaft Einsatz finden. Sie bieten ähnliche Eigenschaften wie synthetische Schäume, sind jedoch umweltfreundlicher.

Holzschaum ist ein neues Schaummaterial aus nachwachsenden Rohstoffen. Durch ein spezielles Verfahren wird Holz in eine schaumartige Struktur umgewandelt, wobei auf fossile Rohstoffe und synthetische Chemikalien weitgehend verzichtet wird. Der Schaum zeichnet sich durch seine Leichtigkeit, gute Wärmedämmfähigkeit und eine hohe Stabilität aus, was ihn für Bau- und Verpackungsanwendungen geeignet macht. Nachteilig ist jedoch, dass die feste Holzmasse durch ein sehr energieintensives Verfahren zu einer Fasersuspension aufgeschlossen werden muss.

Zelluloseschäume werden aus pflanzlichen Fasern hergestellt und bieten eine nachhaltige Alternative zu synthetischen Schäumen. Sie finden Anwendung in der Verpackungsindustrie und als Dämmmaterial, sind biologisch abbaubar und führen zu einer geringeren Umweltbelastung.

Naturlatexschäume werden aus dem Kautschuk des Gummibaums gewonnen und sind biologisch abbaubar. Sie werden in Matratzen, Kissen und Polstermöbeln verwendet und bieten eine hervorragende Elastizität und hohen Komfort. Daher stellen sie eine nachhaltige Alternative zu synthetischem Latex dar.

Die Gemeinsamkeit synthetischer und nachhaltiger Schäume besteht in der immer gleichen Verwendung von Treibmitteln. Zur Aufschäumung dieser Materialien können chemische oder physikalische Treibmittel eingesetzt werden. Chemische Treibmittel zersetzen sich und erzeugen dadurch Gase. Beispiele hierfür sind anorganische Salze wie Carbonate und Hydrogencarbonate sowie stickstoffbildende Komponenten wie Ammoniumcarbonat und Ammoniumnitrit. Ferner kommen Wasserstoffperoxid und organische Substanzen wie Isocyanate in Betracht. Physikalische Treibmittel umfassen leicht-flüchtige Flüssigkeiten und Gase wie n-Pentan oder Isobutan, die während der Schaumbildung verdampfen oder bereits in Gasform expandieren.

Aus der DE 10 2020 119 698 A1 ist ein Verfahren zur Herstellung katalytisch aktiver Proteinschäume bekannt, umfassend die Schritte A) Herstellung katalytisch aktiver, mit einem Konnektor fusionierter Proteine sowie katalytisch aktiver, mit einem zum Konnektor komplementären Konnektor fusionierter Proteine; B) Herstellung von katalytisch aktive Proteine enthaltenden Blasen in einem Blasengenerator unter Einsatz einer Gasphase und einer Lösung der katalytisch aktiven, mit dem Konnektor fusionierten Proteine und der katalytisch aktiven, mit dem Konnektor fusionierten Proteine aus Schritt A); C) Überführen der in Schritt B) hergestellten Blasen in eine Reaktionskammer; D) Kupplung der in den Blasen enthaltenen katalytisch aktiven Proteine aus Schritt B) in der Reaktionskammer unter Ausbildung eines katalytisch aktiven Proteinschaums. Nachteilhafterweise ist ein Blasengenerator erforderlich.

In einer ersten beschriebenen Ausführungsform umfasst die Vorrichtung einen Blasengenerator. Für die Herstellung des Blasengenerators werden im erfindungsgemäßen Verfahren verschiedene Materialien, wie z.B. Metalle, Glas oder Polymere verwendet. Bevorzugt werden für die Herstellung des Blasengenerators Polydimethylsiloxan und Polymethylmethacrylat eingesetzt. Um die Strukturen als fluidische Einheiten zu verwenden, müssen die Strukturen verschlossen werden. Die Struktur wird dabei entweder durch thermische Plasmaoxidation auf einen Glasobjektträger oder auf Polydimethylsiloxan gebondet.

In einer zweiten beschriebenen Ausführungsform wird die Vorrichtung des Blasengenerators zuerst mit Stickstoff geflutet und durchströmt. Im Anschluss wird die Lösung katalytisch aktiver, mit Konnektoren fusionierter Proteine mit einer konstanten Flussgeschwindigkeit in eine mikrofluidische Einheit eingelassen und an der Kreuzungsdüse durch Stickstoff aufgeschäumt. Das aufgeschäumte Material wird am Auslass aufgefangen und direkt in eine Reaktionskammer überführt. Damit ergibt sich ein sehr aufwändiges Verfahren zur Herstellung des Proteinschaumes mit der Notwendigkeit des Blasengenerators und der Reaktionskammer.

### OFFENBARUNG DER ERFINDUNG

Es ist daher die Aufgabe der vorliegenden Erfindung, ein vereinfachtes Verfahren zur Herstellung eines Schaumkörpers auf der Basis von Pflanzenproteinen vorzuschlagen.

Diese Aufgabe wird ausgehend von einem Verfahren gemäß dem Oberbegriff des Anspruchs 1, ausgehend von einem Schaumköper gemäß Anspruch 13 sowie ausgehend von einem Sandwichbauteil gemäß Anspruch 14 in Verbindung mit den jeweils kennzeichnenden Merkmalen gelöst. Vorteilhafte Weiterbildungen der Erfindung sind in den abhängigen Ansprüchen angegeben.

Die Erfindung schließt die technische Lehre ein, dass das Verfahren wenigstens die folgenden Schritte umfasst: Bereitstellung einer Proteinmasse, Zugabe eines Expansionsmittels in die Proteinmasse umfassend Expansionskapseln, Erwärmen der Proteinmasse mit dem Expansionsmittel in Form der Expansionskapseln durch eine Wärmezufuhr, wobei die Proteinmasse in eine denaturierte Proteinmasse überführt wird und insbesondere gleichzeitig die Expansionskapseln aktiviert werden und expandieren.

Kerngedanke der Erfindung ist die Nutzung eines besonders einfach aufgebauten und einfach funktionierenden Expansionsmittels in Form von Expansionskapseln, um die denaturierenden und/oder denaturierten Pflanzenproteine zu einem Schaum zu expandieren. Derartige Expansionskapseln, die auch als thermisch expandierende Mikrokapseln oder als thermisch expandierbare Mikrokapseln bezeichnet werden können, können der Proteinmasse in einem nicht aktivierten Zustand zugegeben werden, und beispielsweise nach oder während einer Durchmischung der Proteinmasse mit dem Expansionsmittel in Form der Expansionskapseln kann eine Erwärmung der Proteinmasse stattfinden, wodurch auch die Expansionskapseln erwärmt und damit aktiviert werden. Vorzugsweise liegt der mittlere Gewichtsanteil der eingesetzten Expansionskapseln zwischen 0,5 % und 25 % bezogen auf die eingesetzte Proteinmasse, wobei der Gewichtsanteil lokal variieren kann, um unterschiedliche Schaumdichten zu realisieren.

Der schaumtreibende Effekt der Expansionskapseln erfolgt dabei durch eine Expansion der Kapseln, beispielsweise auf das 60-fache der Größe der Expansionskapseln im nicht aktivierten Zustand. Die Expansionskapseln können aus einer Kapselhaut und einem Expansionsstoff aufgebaut sein, wobei die Kapselhaut unbeschädigt bleiben kann, während der Expansionsstoff expandiert und die Kapselhaut eine entsprechende Dehnung erfährt.

Dabei ist nicht vorgesehen, aber hingegen auch nicht ausgeschlossen, dass der Expansionsstoff mit der Proteinmasse reagiert oder eine sonstige stoffliche Verbindung eingeht. Expansionsmittel basierend auf Expansionskapseln können der Proteinmasse in einem trockenen oder in einem feuchten, in einem in Wasser dispergierten Zustand zugegeben werden, wobei derartige Expansionskapseln insbesondere fließ- oder schüttfähig sind und bei einem Vermischen der Proteinmasse eine gute Verteilung in der Masse ermöglichen. Der Vorteil der erfindungsgemäßen Lösung ist dabei nicht nur die Aktivierung der Expansionskapseln durch die Wärmezufuhr, sondern die Proteinmasse kann zugleich denaturieren und/oder in eine denaturierte Proteinmasse überführt werden. Die Denaturierung und die Expansion der Proteinmasse erfolgen dabei vorzugsweise zeitgleich. Bedarfsweise kann die Denaturierung physikalisch vorzugsweise durch Druck und/oder Strahlung und/oder chemisch durch denaturierende Chemikalien wie Säuren, Basen, Salze, Lösungsmittel und Enzyme, besonders aber Harnstoff, Guanidinhydrochlorid und Natriumdodecylsulfat unterstützt werden.

Die Denaturierung beschreibt den Prozess, bei dem strukturelle Veränderungen in Biopolymeren wie Proteinen hervorgerufen werden. Dabei bleibt die Primärstruktur des Proteins, also die lineare Abfolge der Aminosäuren, unverändert. Jedoch führen diese äußeren Einflüsse dazu, dass die höheren Strukturebenen des Proteins, insbesondere die sekundäre, tertiäre und gegebenenfalls auch die quartäre Struktur, verändert oder zerstört werden. Durch die Zufuhr von Energie, etwa in Form von Wärme, werden die stabilisierenden nicht-kovalenten Bindungen zwischen den verschiedenen Bereichen der Polypeptidkette wie Wasserstoffbrückenbindungen, ionische Bindungen, Van-der-Waals-Kräfte und polare Wechselwirkungen aufgebrochen oder destabilisiert. Diese Bindungen sind verantwortlich für die spezifische Faltung des Proteins. Als Folge der Denaturierung verliert das Protein seine native Konformation.

Jedes Protein hat eine spezifische native Konformation, die von pH-Wert und Temperatur beeinflusst wird. Die Löslichkeit von Proteinen hängt vom pH-Wert, der Ionenkonzentration, den Lösungsmitteln und der Temperatur ab. Wassermoleküle, die mit den geladenen Stellen der Proteine in Wechselwirkung treten, lösen sie auf, während sich elektrisch geladene Proteinketten gegenseitig abstoßen, was zur Dissoziation und Entfaltung führt.

Sojaproteine lösen sich unter alkalischen Bedingungen besser auf als unter sauren Bedingungen. Bei niedrigen Ionenkonzentrationen verbessern verringerte elektrostatische Anziehungskräfte die Löslichkeit durch Wechselwirkung mit den Proteinladungen. Hohe Ionenkonzentrationen verringern die Löslichkeit aufgrund der lonenhydratation.

Die Denaturierung von Proteinen kann durch Hitze, Säuren, Laugen, konzentrierte Salze oder Lösungsmittel verursacht werden, wodurch hydrophobe Gruppen freigelegt und die Wasserbindungseigenschaften verändert werden, wodurch sich die Viskosität erhöht. Sowohl Temperaturals auch pH-Verschiebungen können die Viskosität von Proteinlösungen erheblich beeinflussen. Die Viskosität nimmt im Allgemeinen mit steigendem pH-Wert zu, was auf die Entfaltung und Streckung der Proteinmoleküle durch negative Ladungen zurückzuführen ist.

Bei neutralem pH-Wert von 7,0 bis 7,5 bilden Proteinlösungen hochviskose Dispersionen, und bei einem leicht saurem pH-Wert von 6,0 bis 6,5 bilden sie schwache Gele. Ein hoher pH-Wert bewirkt, dass die Proteine negative Ladungen erhalten und sich gegenseitig abstoßen, wodurch die Viskosität bei der Entfaltung der Moleküle zunimmt.

Die Proteinmasse umfasst gemäß einer bevorzugten Ausführungsform Proteinketten, insbesondere natürliche Polypeptidketten, die als Ausgangsstoff verwendet werden. Als Rohstoffe für die Pflanzenproteine kommen bevorzugt Ölsaaten mit hohem Proteingehalt und/oder Einjahrespflanzen zum Einsatz, wie beispielsweise Raps, Sonnenblumen und auch Soja. Die Pflanzenproteine werden in Form von Extraktionsschroten und Presskuchen eingesetzt, wobei diese ohne weitere Aufbereitung oder Isolierung als Basis für die Proteinmasse dienen können. Die Verwendung von Proteinisolaten und/oder Mischungen von Proteinen unterschiedlichen Ursprungs ist ebenso möglich.

Die Proteinmasse kann anteilig Wasser und/oder Fasern enthalten, die die mechanischen und/oder die akustischen und/oder die thermischen Eigenschaften beeinflussen. Die Fasern sind bevorzugt Cellulosefasern, die im Extraktionsschrot und/oder Presskuchen von Ölsaaten anfallen. Der gewichtsbezogene Proteingehalt der Proteinmasse liegt vorzugsweise im Bereich von 20 % und 65 % bezogen auf den Feststoffanteil. Eine Konzentration von 20 % an isoliertem Eiweiß ist allgemein zu niedrig, sie ist jedoch ausreichend, wenn Eiweißkuchen verwendet werden. Eine Konzentration von 70 % oder mehr an isoliertem Rapseiweiß ist zu hoch, die höchste brauchbare Konzentration liegt bei 65 %, aber selbst dann lässt sich die Proteinmasse nur schwer zwischen den Holzschichten verteilen.

Die Viskosität der Proteinmasse liegt in der nativen Konfiguration des Proteins vorzugsweise zwischen 500 mPas und 250.000 mPas und/oder 5.000 mPas und 50.000 mPas. Hohe Viskositäten, die in der Literatur auffindbar ist, betragen bis zu 194.000 mPa-s und betreffen ein Sojabohnenmehl mit Natriumdodecylsulfat-Klebstoff.

Der Proteinmasse kann vorteilhafterweise ein Weichmacher zugesetzt werden. Externe Weichmacher, die in diesem Zusammenhang eingesetzt werden können, sind vor allem Polyole wie Glycerin, Sorbitol, Polyethylenglykol (PEG) oder Propylenglykol. Weitere Beispiele für externe Weichmacher umfassen Mono-, Di- oder Oligosaccharide wie Glukose oder Sukrose sowie Lipide und deren Derivate, darunter Fettsäuren oder Phospholipide. Zusätzlich können auch interne Weichmacher verwendet werden. Diese werden als Bestandteile der Polymermoleküle in die Proteinstruktur integriert, indem sie entweder copolymerisiert werden oder mit der Proteinstruktur chemisch reagieren. Interne Weichmacher sind daher kovalent mit dem Polymer verknüpft, was im Rahmen der Erfindung ebenfalls vorgesehen ist. Bevorzugt wird jedoch Glycerin oder eine Mischung, die Glycerin umfasst als Weichmacher bzw. Plastifizierer in die Proteinmasse eingebracht, da es besonders effektiv die Flexibilität und Verarbeitbarkeit des Materials verbessert.

Der Proteinmasse wird vorzugsweise ein Vernetzungsmittel zugegeben, durch das die Proteinketten der denaturierten Proteinmasse vorzugsweise kovalent miteinander verbunden werden. Die Vernetzung bezeichnet in der makromolekularen Chemie Reaktionen, bei denen Makromoleküle, also beispielsweise Proteinketten, zu einem dreidimensionalen Netzwerk verknüpft werden. Als Vernetzungsmittel können beispielsweise Dialdehyde oder auch Enzyme Verwendung finden, wobei auch Polysäuren und/oder Mischungen davon Verwendung finden können.

Als Expansionsmittel können Expansionskapseln mit einem mittleren Durchmesser von 5 µm bis 200 µm und/oder von 10 µm bis 80 µm und/oder von 15 µm bis 60 µm und/oder von 20 µm bis 40 µm verwendet werden, die bei der Erwärmung ihr Volumen auf das 10-fache bis 100-fache und/oder auf das 20-fache bis 60-fache vergrößern. Für die Expansion werden vorzugsweise Temperaturen zwischen 70 °C und 250 °C und/oder Temperaturen zwischen 85 °C und 230 °C und/oder Temperaturen zwischen 100 °C und 180 °C eingesetzt.

Die Expansionskapseln weisen eine Kapselhaut auf, die bei der Expansion ausgedehnt wird und bei diesem Vorgang dünner wird. Die Kapselhaut der Expansionskapsel kann im nicht expandierten Zustand beispielsweise eine Dicke von 2 µm und im expandierten Zustand erheblich darunterliegen und beispielsweise eine Dicke von 0,5 µm aufweisen. Ferner kann die Expansionskapsel einen Expansionsstoff umfassend einen Kohlenwasserstoff beinhalten, der durch Erwärmung die Volumenzunahme verursacht. Beispielsweise können derartige Expansionsmittel auf Basis von Expansionskapseln von der Fa. Nouryon erworben werden.

Die denaturierte Proteinmasse ist in Verbindung mit den Expansionskapseln so beschaffen, dass nach einer Erwärmung auf eine Zieltemperatur, die idealerweise für einen Zeitraum von bis zu 60 Minuten aufrechterhalten wird, die expandierte Form des Schaumkörpers beibehalten wird, auch wenn die Temperatur nach der Erwärmung wieder sinkt und/oder auch weiter steigt. Im Ergebnis ergibt sich ein formstabiler dreidimensionaler Schaumkörper, der verschiedensten Verwendungen zugeführt werden kann und bei der Herstellung wie auch bei der Entsorgung eine geringe Umweltbelastung darstellt. Somit kann ohne synthetische Bindemittel ein druckfester, poröser Schaumkörper erzeugt werden, dessen mechanische Eigenschaften sich durch die verwendete Proteinmasse, die Faserlänge (wenn enthalten), die Mikrokapseln und die Temperaturführung einstellen lassen.

Die aufgeschäumte Proteinmasse kann auf verschiedene Weise Verwendung finden, insbesondere als poröser und druckfester Formkörper, der von einer Werkzeugform abgeformt wird. Es können aber auch ein oder zwei sich gegenüberliegende Deckflächenkörper, vorzugsweise aus Holz und/oder Holzfurnier und/oder Textilgewebe bereitgestellt werden, zwischen denen die Proteinmasse eingegeben wird und unter Wärmezufuhr expandiert und denaturiert. Damit besteht die Möglichkeit, ein Sandwichbauteil mit zwei Deckflächenkörpern in spezifischem Abstand zu schaffen, zwischen denen die Proteinmasse aufgeschäumt wird oder aufgeschäumt vorliegt. Der Abstand zwischen den Deckflächenkörpern kann lokal variieren, sodass auch komplexe dreidimensionale Deckflächenkörper in ein Sandwichelement mit erfindungsgemäßem Schaumkörper überführt werden können. Vorzugsweise erfolgt die Verbindung mit einem oder mehreren Deckflächenkörpern gänzlich ohne oder anteilig ohne zusätzlichen Klebstoff, da die erfindungsgemäße Verarbeitung bereits zu einer Haftung auf den Deckflächenkörpern führen kann.

Die Proteinmasse kann mit verschiedenen Mengenverhältnissen des Expansionsmittels und/oder des Weichmachers und/oder des Vernetzungsmittels geschichtet übereinander und/oder nebeneinander angeordnet werden, sodass ein Gesamtschaumkörper mit lokal unterschiedlichen Eigenschaften entsteht. So ist es auch denkbar, dass ein Sandwichbauteil geschaffen wird, in dem der erfindungsgemäße Schaumkörper die Kernlage bildet mit sich über der Höhe ändernden Eigenschaften. Auch in der flächigen Erstreckung kann das Sandwichbauteil mit lokal voneinander unterschiedlichen Eigenschaften geschaffen werden.

Die Erfindung richtet sich ferner auf einen Schaumkörper wie vorstehend beschrieben, aufweisend eine denaturierte Proteinmasse und ein Expansionsmittel insbesondere in Form von Expansionskapseln in einem expandierten Zustand.

Die Erfindung richtet sich schließlich noch auf ein Sandwichbauteil mit zwei Deckflächenkörpern und einem Schaumkörper in Anordnung zwischen den beiden Deckflächenkörpern, wobei der Schaumkörper wie vorstehend beschrieben hergestellt ist.

### BEVORZUGTES AUSFÜHRUNGSBEISPIEL DER ERFINDUNG

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Figur 1: die Ansicht einer Proteinmasse in der nativen Konformation, die unter Einwirkung von Wärme in einen denaturierten Zustand überführt wird,
- Figur 2: die Ansicht der denaturierten Proteinmasse aufweisend ein Vernetzungsm ittel,
- Figur 3: eine schematische Ansicht der Verfahrensschritte zur Herstellung eines Schaumkörpers auf Basis von Proteinen gemäß der Erfindung,
- Figur 4: die Ansicht eines Expansionsmittels, ausgeführt als Expansionskapseln in einem nicht aktivierten Zustand sowie in einem aktivierten Zustand,
- Figur 5: ein Beispiel eines Sandwichbauteils mit zwei Deckflächenkörpern, zwischen denen eine noch nicht expandierte Proteinmasse eingegeben wurde und
- Figur 6: das Sandwichbauteil gemäß Figur 5, wobei die denaturierte Proteinmasse erwärmt wurde, sodass diese expandiert ist und den Schaumkörper zwischen den beiden Deckflächenkörpern bildet.

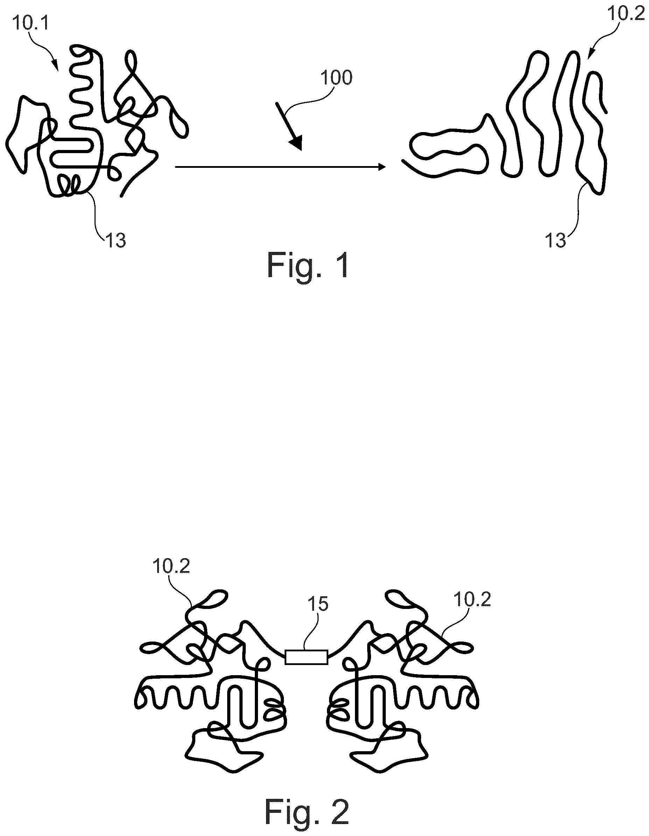

In Figur 1 ist auf der linken Seite eine natürliche Proteinmasse 10.1 und auf der rechten Seite eine denaturierte Proteinmasse 10.2 schematisch dargestellt. Um die natürliche Proteinmasse 10.1 in den Zustand der denaturierten Proteinmasse 10.2 zu überführen, wird mit einer Wärmezufuhr 100 die natürliche Proteinmasse 10.1 erwärmt, wobei zusätzlich eine physikalische und/oder chemische Denaturierung erfolgen kann. Bei der mit der Erwärmung einhergehenden Denaturierung werden Strukturveränderungen in der Proteinmasse hervorrufen, was daran zu erkennen ist, dass die Proteinketten, insbesondere Peptidketten, ihre ursprüngliche Faltungsform vorzugsweise permanent verlieren. Die Kettenstruktur der Molekülkette und damit die Abfolge der Bausteine aus der Primärstruktur bleiben bei einer Denaturierung aber erhalten.

In der Figur 2 sind beispielhaft zwei Proteinmassen 10.2 im bereits denaturierten Zustand gezeigt, wobei der denaturierten Proteinmasse 10.2 ein Vernetzungsmittel 15 zugegeben wurde, welches schematisch gezeigt ist. Als Vernetzungsmittel 15 können beispielsweise niedermolekulare Aldehyde, Dialdehyde und/oder Enzyme zugegeben werden. Das Vernetzungsmittel 15 bewirkt, dass die durch die Denaturierung erzielte Struktur der gebildeten Proteinmassen 10.2 eine zueinander orts- und formfeste Form einnehmen können.

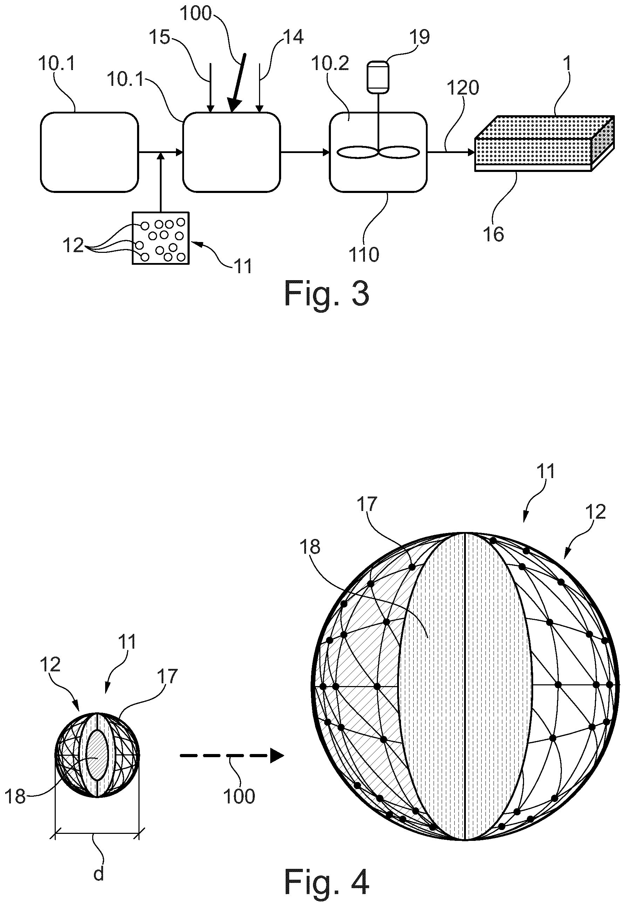

In Figur 3 ist das erfindungsgemäße Verfahren schematisch mittels eines Blockdiagramms wiedergegeben. Das Verfahren dient zur Herstellung eines Schaumkörpers 1 auf der Basis von Pflanzenproteinen, wobei zunächst die Proteinmasse 10.1 bereitgestellt wird, die sich in einem natürlichen Zustand befindet. Dieser natürlichen Proteinmasse 10.1 wird ein Expansionsmittel 11 in Form von Expansionskapseln 12 zugegeben, welche später noch genauer beschrieben werden.

In einem weiteren Verfahrensschritt 100 erfolgt eine Wärmezufuhr, und es werden zudem Glycerin 14 als Weichmacher und ein Vernetzungsmittel 15 zugegeben, wobei die Wirkung des Vernetzungsmittels 15 bereits in Zusammenhang mit Figur 2 beschrieben wurde.

Durch die Wärmezufuhr 100 wird die natürliche Proteinmasse 10.1 nun überführt in eine denaturierte Proteinmasse 10.2, die schließlich im nachfolgend gezeigten Schritt des Mischens 100 der Proteinmasse 10.2 mittels des gezeigten Rührwerks 19 verrührt wird, beispielsweise für eine Zeit von 30 Minuten bei einer Temperatur von 50 °C. Eine Erhöhung der Temperatur auf 40-50 °C verbessert die Löslichkeit der Proteine. Eine Temperatur von mehr als 50 °C führt zur Denaturierung der Proteine und häufig zu deren Ausfällung. Bei diesen höheren Temperaturen werden die Bindungen, die die Sekundär- und Tertiärstrukturen des Proteins aufrecht erhalten, aufgebrochen. Durch diese Störung werden hydrophobe Gruppen freigelegt, was zu einer verstärkten Aggregation der Proteinmoleküle führt. Diese Aggregation erhöht die Viskosität der Proteinlösung und verringert die Löslichkeit der Proteine.

Schließlich wird die so gebildete Proteinmasse 10.2 mit den zugegebenen Vernetzungsmitteln und Weichmacher in eine Form gebracht, beispielsweise auf einen Deckflächenkörper 16 als Bodenkörper, der lediglich beispielhaft gezeigt ist, wobei oberseitig ein weiterer Deckflächenkörper 16 vorgesehen sein kann, um ein Sandwichbauteil zu bilden.

Figur 4 zeigt ein Ausführungsbeispiel eines Expansionsmittels 11 in Form einer Expansionskapsel 12, die auf der linken Seite in einem nicht aktivierten Zustand und auf der rechten Seite in einem aktivierten, expandierten Zustand dargestellt ist. Das Expansionsmittel 11 kann dabei eine sehr große Anzahl von Expansionskapseln 12 umfassen, die Abmessungen im unteren Mikrometerbereich aufweisen können. Die Expansionskapseln 12 können beispielsweise im links dargestellten, nicht aktivierten Zustand einen Durchmesser von 12 Mikrometern aufweisen, wobei der Durchmesser im rechts dargestellten, aktivierten Zustand einen Wert von beispielsweise 40 Mikrometern annehmen kann. Damit kann sich das Volumen der Expansionskapseln 12 etwa um das 40-fache vergrößern.

Wird der denaturierten Proteinmasse 10.2, insbesondere bereits der noch natürlichen Proteinmasse 10.1, eine entsprechende Menge an Expansionskapseln 12 zugegeben und wird die Proteinmasse 10.1 mit den Expansionskapseln 12 erhitzt, so verändert sich die natürliche Proteinmasse 10.1 zur denaturierten Proteinmasse 10.2 und zugleich expandiert die Proteinmasse 10.2 aufgrund der Expansion der Expansionskapseln 12. So kann durch eine einfache Wärmezufuhr 100 nicht lediglich nur die Größe der Expansionskapseln 12 entsprechend vergrößert werden, sondern durch die Expansion einer großen Anzahl von Expansionskapseln 12 als Beimischung zur Proteinmasse 10.1 können diese bei gleichzeitiger Denaturierung zur Proteinmasse 10.2 expandieren, da die gesamte Expansion aus der Summe sämtlicher expandierenden Expansionskapseln 12 resultiert, die millionenfach der Proteinmasse zugegeben werden.

Die Expansionskapseln 12 besitzen eine Kapselhaut 17, beispielsweise aus einem Polymer, und die Expansionskapseln 12 sind gefüllt mit einem Expansionsstoff 18, beispielsweise einem Kohlenwasserstoff. Der Expansionsstoff 18 kann dabei so eingestellt sein, dass für die hier relevanten Temperaturen, beispielsweise zwischen 20 °C vor der Erwärmung, also Raumtemperatur, im nicht aktivierten Zustand und 110 ° C als Expansionstemperatur nach der Erwärmung ein Phasenübergang des Expansionsstoffes 18 stattfindet, etwa von flüssig zu gasförmig, wodurch die starke Volumenzunahme ausgelöst werden kann.

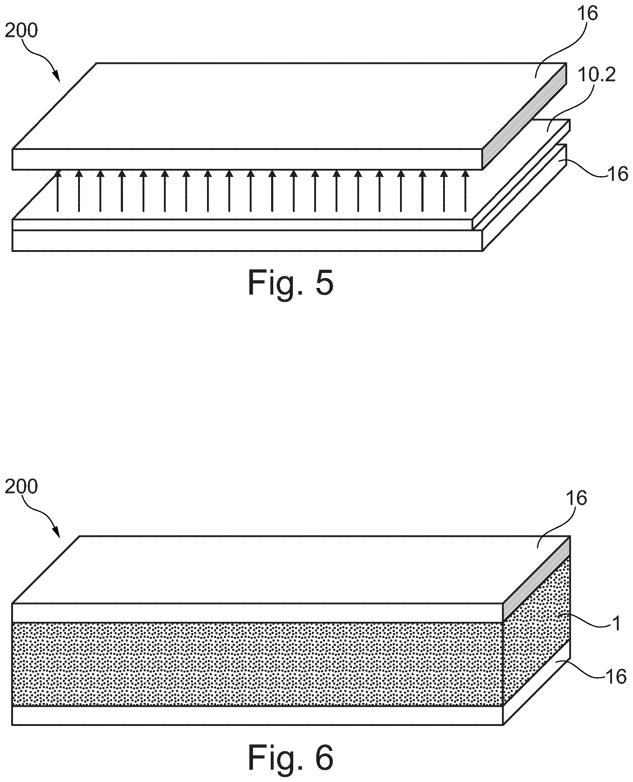

Die Figur 5 zeigt ein einfaches Beispiel eines Sandwichbauteils 200 im noch nicht fertigen Zustand, wobei zwei Deckflächenkörper 16 parallel aber mit Abstand zueinander angeordnet sind, wobei auf der Innenseite des unteren Deckflächenkörpers 16 die denaturierte Proteinmasse 10.2 eingebracht ist, die sodann expandiert.

Figur 6 zeigt somit das fertige Sandwichbauteil 200 mit den beiden oberseitigen und unterseitigen Deckflächenkörpern 16, zwischen denen der Schaumkörper 1 angeordnet ist, der sich durch die aufgeschäumte Proteinmasse 10.2 gemäß Figur 5 bildet.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht. Sämtliche aus den Ansprüchen, der Beschreibung oder den Zeichnungen hervorgehenden Merkmale und/oder Vorteile, einschließlich konstruktiver Einzelheiten oder räumlicher Anordnungen, können sowohl für sich als auch in den verschiedensten Kombinationen erfindungswesentlich sein.

### Bezugszeichenliste:

- 1: Schaumkörper

- 10.1: Proteinmasse
- 10.2: denaturierte Proteinmasse
- 11: Expansionsmittel
- 12: Expansionskapsel
- 13: Proteinkette
- 14: Glycerin
- 15: Vernetzungsmittel
- 16: Deckflächenkörper
- 17: Kapselhaut
- 18: Expansionsstoff
- 19: Rührwerk

- 100: Wärmezufuhr
- 110: Mischen der Proteinmasse
- 120: Ausgabe der expandierenden Proteinmasse
- 200: Sandwichbauteil

- d: Durchmesser

## Patentansprüche

1. Verfahren zur Herstellung eines Schaumkörpers (1) auf der Basis von Proteinen, wobei das Verfahren wenigstens die folgenden Schritte umfasst:
- Bereitstellung einer Proteinmasse (10.1),
- Zugabe eines Expansionsmittels (11) umfassend thermisch aktivierbare Expansionskapseln (12),
- Erwärmen der Proteinmasse (10.1) mit dem Expansionsmittel (11) durch Wärmezufuhr (100), wobei
1. die Proteinmasse (10.1) in eine denaturierte Proteinmasse (10.2) überführt wird und
2. die Expansionskapseln (12) aktiviert werden und expandieren.

2. Verfahren nach Anspruch 1,
**dadurch gekennzeichnet,**
**dass** die Proteinmasse (10.1) Proteinketten (13), insbesondere natürliche Polypeptidketten, aufweist und dass der Proteinmasse (10.1, 10.2) ein Vernetzungsmittel (15) zugegeben wird, durch das die Proteinketten (13) der denaturierten Proteinmasse (10.2) miteinander verbunden werden.

3. Verfahren nach Anspruch 1 oder 2,
**dadurch gekennzeichnet,**
**dass** der Proteinmasse (10.1, 10.2) ein Weichmacher, bevorzugt Glycerin (14) oder eine Mischung umfassend Glycerin (14), zugegeben wird.

4. Verfahren nach Anspruch 3,
**dadurch gekennzeichnet,**
**dass** als Vernetzungsmittel (15) niedermolekulare Aldehyde, Dialdehyde und/oder Enzyme zugegeben werden.

5. Verfahren nach einem der vorgenannten Ansprüche,
**dadurch gekennzeichnet,**
**dass** als Expansionsmittel (11) thermisch aktivierbare Expansionskapseln (12) mit einem Durchmesser (d) von 5 µm bis 200 µm und/oder von 10 µm bis 80 µm und/oder von 15 µm bis 60 µm und/oder von 20 µm bis 40 µm verwendet werden und die bei der Erwärmung ihr Volumen auf das 10-fache bis 100-fache und/oder auf das 20-fache bis 60-fache. Für die Expansion werden vorzugsweise Temperaturen zwischen 70 °C und 250 °C und/oder Temperaturen zwischen 85 °C und 230 °C und/oder Temperaturen zwischen 100 °C und 180 °C eingesetzt.

6. Verfahren nach einem der vorgenannten Ansprüche,
**dadurch gekennzeichnet,**
**dass** die thermisch aktivierbaren Expansionskapseln (12) eine Kapselhaut (17) aufweisen, die bei der Expansion ausgedehnt wird, wobei die Kapselhaut weitestgehend intakt bleibt (12).

7. Verfahren nach Anspruch 6,
**dadurch gekennzeichnet,**
**dass** die Kapselhaut (17) der Expansionskapseln (12) im nicht expandierten Zustand eine Dicke von 1 µm bis 4 µm und im expandierten Zustand eine Dicke von 0,1 µm bis 1 µm aufweist.

8. Verfahren nach einem der vorgenannten Ansprüche,
**dadurch gekennzeichnet,**
**dass** die Expansionskapseln (12) einen Expansionsstoff (18) umfassend einen Kohlenwasserstoff beinhalten, der durch Erwärmung die Volumenzunahme verursacht.

9. Verfahren nach einem der vorgenannten Ansprüche,
**dadurch gekennzeichnet,**
**dass** die denaturierte Proteinmasse (10.2) nach einer erfolgten Erwärmung die expandierte Form des Schaumkörpers (1) beibehält, auch wenn die Temperatur nach der Erwärmung wieder sinkt und/oder auch wieder steigt.

10. Verfahren nach einem der vorgenannten Ansprüche,
**dadurch gekennzeichnet,**
**dass** die denaturierte Proteinmasse (10.2) nach Zugabe des Weichmachers, bevorzugt Glycerin (14) oder Mischungen umfassend Glycerin (14) und/oder des Vernetzungsmittels (15) vermischt wird.

11. Verfahren nach einem der vorgenannten Ansprüche,
**dadurch gekennzeichnet,**
**dass** zumindest ein oder zwei sich gegenüberliegende Deckflächenkörper (16) bereitgestellt werden, zwischen denen die Proteinmasse (10.2) eingegeben wird und expandiert.

12. Verfahren nach einem der vorgenannten Ansprüche,
**dadurch gekennzeichnet,**
**dass** die Proteinmasse (10.1, 10.2) mit verschiedenen Mengenverhältnissen des Expansionsmittels (11) und/oder des Glycerins (14) und/oder des Vernetzungsmittels (15) geschichtet übereinander und/oder nebeneinander angeordnet werden.

13. Schaumkörper (1), hergestellt nach einem der vorgenannten Ansprüche, aufweisend eine denaturierte Proteinmasse (10.2) und ein Expansionsmittel (11) insbesondere in Form von Expansionskapseln (12) in einem expandierten Zustand.

14. Sandwichbauteil mit zwei Deckflächenkörpern (16) und einem Schaumkörper (1) in Anordnung zwischen den beiden Deckflächenkörpern (16), wobei der Schaumkörper (1) nach einem der Ansprüche 1 bis 12 hergestellt ist.
